# EUROPEAN PATENT APPLICATION

(11) **EP 3 396 551 A1**
(43) Date of publication of application: **31.10.2018**
(21) Application number: 17275060.6
(22) Date of filing: 25.04.2017
(51) Int. Cl.: G06F 9/54, G06F 9/44, G06N 5/04, G06N 99/00, G06F 17/27

(54) **APPARATUS AND METHOD FOR INTEGRATING A SINK DEVICE WITH A SOURCE DEVICE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A computer device 200 for integrating a sink device 120 with a source device 130 coupleable thereto is provided. The computer device 200 comprises a processor circuit and a memory circuit. The computer device 200 further comprises an artificial intelligence, Al, mediator 300 configured to map a function of a programmatic interface exposed by the source device 130 to an associated function of the sink device 120. In this way, in response to invoking the associated function by the sink device 120, the mapped function of the source device 130 is invoked.

## Description

### Field

The present invention relates generally to the field of computers and computer devices. More particularly, the present invention relates to a computer device and a method for integrating a sink device with a source device coupleable thereto, for example, for integrating a control computer device with a sensor device coupleable thereto.

### Background to the invention

System integration, such as computationally or programmatically integrating sink devices with source devices coupleable thereto, typically provides data communication and/or exchange between the sink devices and the source devices. Generally, source devices may output, or transmit, data which is input to, or received by, the sink devices. Typically, systems are designed to facilitate system integration. For example, the source devices and the sink devices may be designed together and/or cooperatively, such as to agreed or standardized specifications, so as to provide plug and socket type functionality. In this way, system integration is built in from the outset. Alternatively, source devices may be developed to defined or standards specifications of the sink devices. In this way, system integration is also built in from the outset.

However, system integration in which the source devices and/or the sink devices are not designed together and/or cooperatively, such as in which the source devices and/or the sink devices do not conform to the same specifications, may be problematic. That is, the source devices and/or the sink devices may have been developed according to different specifications. Such potentially problematic system integration may be encountered when a new source device is to be integrated with an existing sink device, such as a legacy sink device. For example, a new sensor device, providing new and/or complementary data, may be integrated with an existing control computer device, so as to enhance capability of the existing control computer device. Conversely, such potentially problematic system integration may be encountered when a new sink device is to be integrated with an existing source device. For example, a new control computer device may be integrated with an existing sensor device. Furthermore, such potentially problematic system integration may be compounded by requirements to integrate a plurality of different source devices with a single sink device, in which the different source devices conform respectively to different specifications.

Conventional approaches to such potentially problematic system integration typically rely on human specialists, having expertise of the source devices and/or the sink devices and having specialist software skill sets, to manually perform tasks to achieve system integration. Such manual system integration requires human specialists, who may be required to be physically local to the source devices and/or the sink devices rather than remote therefrom. For example, the source devices and/or the sink devices may be inaccessible to the human specialists. Furthermore, such manual system integration may be associated with extended or protracted timescales. That is, integration of an operational sink device with a newly-deployed source device may be logistically challenging while deactivation of the operational sink device may also be required for a lengthy time period. Hence, there is still a need to improve integration of a sink device with a source device coupleable thereto while reducing human reliance and reducing timescales.

The example embodiments have been provided with a view to addressing at least some of the difficulties that are encountered in current computer devices and computer networks, whether those difficulties have been specifically mentioned above or will otherwise be appreciated from the discussion herein.

### Summary of the Invention

According to the present invention there is provided a computer device, a method and a computer-readable storage medium as set forth in the appended claims. Additional features of the invention will be apparent from the dependent claims, and the description which follows.

In general, the invention provides a computer device and method for integrating a sink device with a source device coupleable thereto. The computer device comprises a processor circuit and a memory circuit. The computer device also comprises an artificial intelligence, AI, mediator. The AI mediator is configured to map a function of a programmatic interface exposed by the source device to an associated function of the sink device, whereby, in response to invoking the associated function by the sink device, the mapped function of the source device is invoked. In this way, integration of the sink device with the source device is facilitated, since the integration is provided by the computer device by mapping a function of a programmatic interface exposed by the source device to an associated function of the sink device, thereby reducing reliance on human integration specialists and improving timescales to effect integration.

There now follows a summary of various aspects and advantages according to embodiments of the invention. This summary is provided as an introduction to assist those skilled in the art to more rapidly assimilate the detailed discussion herein and is not intended in any way to limit the scope of the claims that are appended hereto.

According to a first aspect, there is provided a computer device for integrating a sink device with a source device coupleable thereto, the computer device comprising a processor circuit and a memory circuit, wherein the computer device comprises an artificial intelligence, AI, mediator configured to: map a function of a programmatic interface exposed by the source device to an associated function of the sink device; whereby, in response to invoking the associated function by the sink device, the mapped function of the source device is invoked.

In one example, the AI mediator is configured to parse a human-readable text specification document related to the programmatic interface.

In one example, the AI mediator is configured to identify technology used by the source device.

In one example, the AI mediator is configured to discover supporting information related to the source device.

In one example, the AI mediator is configured to provide an adapter configured to map the function of the programmatic interface exposed by the source device to the associated function of the sink device.

In one example, the source device comprises a sensor.

According to a second aspect, there is provided a method of integrating a sink device with a source device coupleable thereto, the method implemented on a computer device comprising a processor circuit and a memory circuit, wherein the computer device comprises an artificial intelligence, AI, mediator, the method comprising: mapping a function of a programmatic interface exposed by the source device to an associated function of the sink device; whereby, in response to invoking the associated function by the sink device, the mapped function of the source device is invoked.

In one example, the method comprises parsing a human-readable text specification document related to the programmatic interface.

In one example, the method comprises identifying technology used by the source device.

In one example, the method comprises discovering supporting information related to the source device.

In one example, the method comprises providing an adapter configured to map the function of the programmatic interface exposed by the source device to the associated function of the sink device.

In one example, the source device comprises a sensor.

According to a third aspect, there is provided a tangible non-transient computer-readable storage medium having recorded thereon instructions which, when implemented by a computer device including a processor circuit and a memory circuit cause the computer device to be arranged as set forth herein and/or which cause the computer device to perform any of the methods as set forth herein.

According to a fourth aspect, there is provided a system comprising a computer device, a sink device and a source device coupleable thereto, the computer device comprising a processor circuit and a memory circuit, the computer device for integrating a sink device with a source device, wherein the computer device comprises an artificial intelligence, AI, mediator configured to: map a function of a programmatic interface exposed by the source device to an associated function of the sink device; whereby, in response to invoking the associated function by the sink device, the mapped function of the source device is invoked.

According to a fifth aspect, there is provided a method of integrating a sink device with a source device coupleable thereto, the method implemented at least in part on a computer device comprising a processor circuit, a memory circuit and an artificial intelligence, AI, mediator, the method comprising: mapping, by the AI mediator, a function of a programmatic interface exposed by the source device to an associated function of the sink device; and in response to invoking the associated function by the sink device, invoking the mapped function of the source device.

### Brief description of the drawings

For a better understanding of the invention, and to show how exemplary embodiments of the same may be brought into effect, reference will be made, by way of example only, to the accompanying diagrammatic Figures, in which:
Figure 1 schematically depicts a network including an example computer device;
Figure 2 schematically depicts the example computer of Figure 1, in more detail;
Figure 3 schematically depicts the example computer of Figure 1, in more detail;
Figure 4 schematically depicts the example computer of Figure 1, in more detail;
Figure 5 schematically depicts another network including the example computer of Figure 1, in more detail;
Figure 6 schematically depicts a part of a technology decision tree;
Figure 7 is a flowchart of the example method of operating the computer device of Figure 1; and
Figure 8 is a flowchart of the example method of operating the computer device of Figure 1, in more detail.

### Detailed Description of the Drawings

At least some of the following example embodiments provide improved integration of a sink device with a source device, in which the integration is provided by the computer device by mapping a function of a programmatic interface exposed by the source device to an associated function of the sink device. In this way, reliance on human integration specialists is reduced while timescales to effect integration may also be improved. Many other advantages and improvements will be discussed in more detail herein.

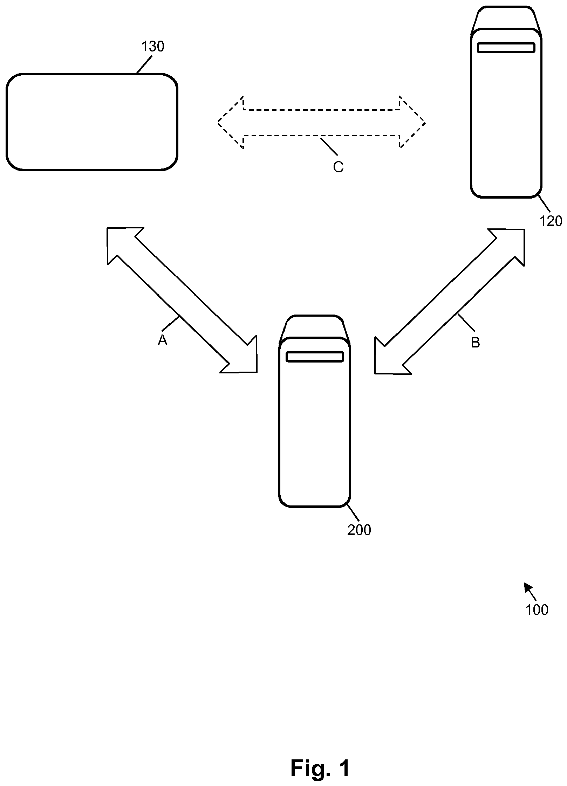

Figure 1 is a schematic overview of a part of a network 100 of a type which may be used in the example embodiments discussed herein, including a computer device 200 according to an example embodiment. Also included are a sink device 120 and a source device 130.

Generally, source devices may output, or transmit, data which is input to, or received by, the sink devices. The sink devices may control the source devices, such as control how data are acquired by the source devices and/or which data are output to the sink devices. For example, the sink devices may send control messages to the source devices. In response to the control messages, the source devices may acquire data and/or output data to the sink devices. Thus, system integration may also include enabling control of the source devices by the sink devices. The data communication and/or exchange between the sink devices and the source devices may be unidirectional, such as from the source device to the sink device, or bidirectional. In some examples, the sink devices may also behave as source devices i.e. the sink devices may also output data and/or be controlled by the source devices. Conversely, in some examples, the source devices may also behave as sink devices i.e. the source devices may also receive data from and/or control the sink devices.

In one example, the source device 130 comprises a sensor, such as an acoustic sensor, a sound sensor, a vibration sensor, an automotive sensor, a transportation sensor, a chemical sensor, an electric current sensor, an electric potential sensor, a magnetic sensor, a radio sensor, an environment sensor, a weather sensor, a moisture sensor, a humidity sensor, a flow sensor, a fluid velocity sensor, an ionizing radiation sensor, subatomic particles sensor, a navigation instruments sensor, a position sensor, an angle sensor, a displacement sensor, a distance sensor, a speed sensor, an acceleration sensor, an optical sensor, a light sensor, an imaging sensor, a photon sensor, a pressure sensor, a force sensor, a density sensor, a level sensor, a thermal sensor, a heat sensor, a temperature sensor, a proximity sensor or a presence sensor. The source device 130 may comprise a plurality of any such sensors. The source device 130 may comprise a passive sensor and/or an active sensor.

In one example, the sink device 120 comprises a control device, such as another computer device.

The computer device 200 is coupled, via path A via the network 100 such as a private network, a virtual private network, an intranet, a cloud, the Internet, to a sink device 120, for example, or comprising, a different second computer device 120. The computer device 200 is also coupled, via path B the network 100 to a source device 130. The sink device 120 is coupleable to the source device 130, for example via the network 100. The source device 130 exposes a programmatic interface including a function, such as to output data. The sink device 120 implements an associated function.

The programmatic interface exposed by the source device 130 may be an Application Programming Interface (API). APIs generally include sets of subroutine definitions, protocols, and tools for building application software. For example, the programmatic interface exposed by the source device 130 may include a set of defined functions (also known as methods) of communication between software components. Since the programmatic interface of the source device is exposed, the function may be public i.e. the function may be accessible to and/or invoked by external software components. In contrast, private (also known as protected) functions typically are not exposed and thus may not be accessible to and/or invoked by the external software components.

Typically, functions, such as the function of the exposed programmatic interface of the source device 130, may be referenced by an identifier, such as a name or number. Some functions may be referenced by a unique identifier, such as a Globally Unique Identifier (GUID), also known as a Universally Unique Identifier (UUID). In this way, the functions may be invoked programmatically via their references. Generally, functions may include one or more inputs and/or one or more outputs. For example, function inputs may be employed to control the source device 130 and/or to specify which data are to be output by the source device 130 to the sink device 120. For example, function outputs may be utilised to transfer an acknowledgement and/or data from the source device 130 to the sink device 120.

The programmatic interface of the source device 130 may be defined by a specification such as or including an interface specification of the source device 130. The interface specification of the source device 130 may include a human-readable text interface specification (for example, a specification document) and/or a programmatic interface specification interpretable by the computer device 200. A human-readable medium or human-readable format, such as the human-readable text interface specification, is a representation of data or information that can be naturally read by humans. In computing, human-readable data is often encoded as ASCII or Unicode text, rather than presented in a binary representation. An input and/or an output of the function of the source device 130 may be defined by this interface specification of the source device 130. The associated function of the sink device 120 may be similarly defined by a specification of the sink device 120. The specification of the sink device 120 may include a human-readable text specification and/or a programmatic specification interpretable by the computer device 200. An input and/or an output of the associated function of the sink device 120 may be defined by the specification of the sink device 120.

The computer device 200 also comprises an artificial intelligence, AI, mediator 300, as described in more detail below. The AI mediator 300 is configured to map a function of the programmatic interface exposed by the source device 130 to the associated function of the sink device 120, whereby, in response to invoking the associated function by the sink device 130, the mapped function of the source device 120 is invoked. That is, following integration, by the computer device 200, of the sink device 120 with the source device 130, wherein the sink device 120 with the source device 130 are coupled via path C, the mapped function of the source device 130 is configured to be invoked in response to invoking the associated function by the sink device 120. In this way, data output by the source device 130, for example, may be received and subsequently processed by the sink device 120. In this way, integration of the sink device 120 with the source device 130 is facilitated, since the integration is provided by the AI mediator 300 of the computer device 200 by mapping a function of a programmatic interface exposed by the source device 130 to an associated function of the sink device 120, thereby reducing reliance on human integration specialists and improving timescales to effect integration.

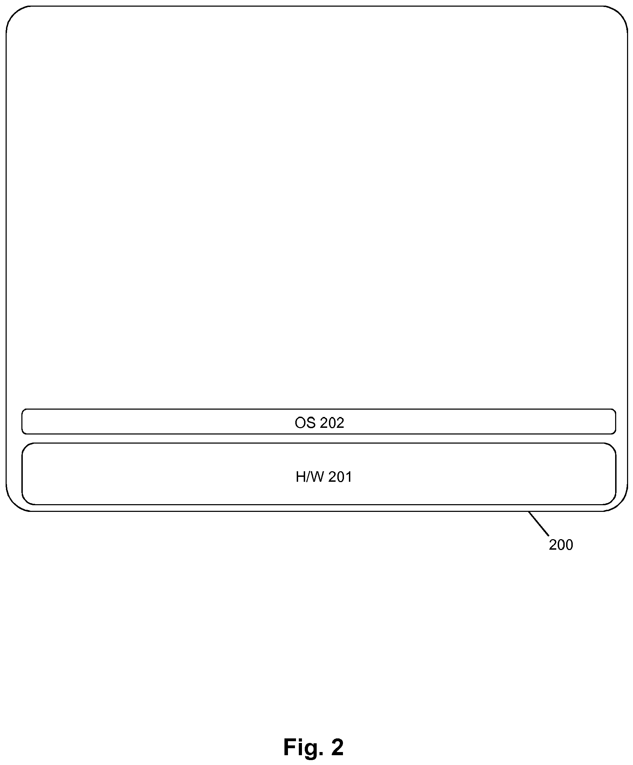

Figure 2 is a schematic overview of the computer device 200 according to an exemplary embodiment of the invention, in more detail. The computer device 200 as herein described typically includes physical hardware (H/W) 201 such as a memory circuit, one or more processor circuits such as central processing units (CPUs), one or more input/output (I/O) interfaces (e.g. network cards, USB interfaces), a power supply and so on. In use, the hardware 201 supports an operating system 202 to provide a runtime environment which supports execution of a plurality of processes or productivity applications, such as client applications, according to the needs of the user or users of this particular computer device 200. The runtime environment provides resources such as installed software, system services, drivers, files and/or registry settings. Via the operating system 202, the computer device 200 may communicate with the sink device 120 and the source device 130.

The computer device 200 may take any suitable form factor, such as a server, a static desktop computer or a portable computing device (laptop, tablet, handhelds smart-phone, etc.). Additionally and/or alternatively, the computer device 200 may be implemented using virtualization, such as a virtual machine, and/or may comprise a network of computer devices, such as provided via cloud computing. Additionally and/or alternatively, the computer device 200 may be implemented as part of the sink device 120 and/or the source device 130.

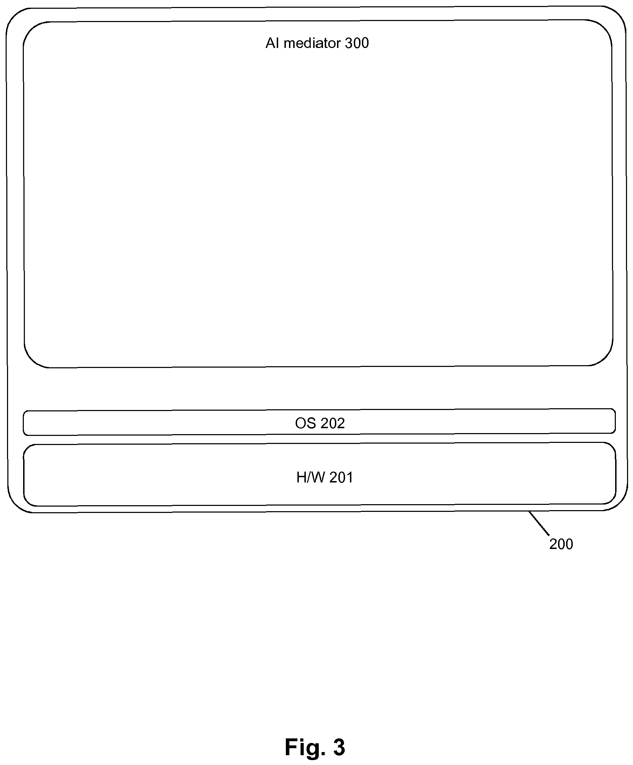

Figure 3 is a schematic overview of the computer device 200 according to an exemplary embodiment of the invention, in more detail. Particularly, the computer device 200 comprises the AI mediator 300. The AI mediator 300 is configured to map a function of the programmatic interface exposed by the source device 130 to the associated function of the sink device 120, whereby, in response to invoking the associated function by the sink device 130, the mapped function of the source device 120 is invoked.

The AI mediator 300 may be configured to provide Machine Learning (ML). For example, the AI mediator 300 may comprise a ML module. ML is a type of AI that gives computers an ability to learn correct decisions without being explicitly programmed. ML algorithms typically make data driven decisions using a model built from sample inputs. ML is employed in a wide range of fields, such as image/video processing, text/speech recognition, search engines, security, robotics, autonomous vehicles, and many others.

The AI mediator 300 may be configured to provide Natural Language Programming (NLP). For example, the AI mediator 300 may comprise an NLP module, such as an NLP engine. NLP may be utilised to extract semantic meaning from human-readable text, such as specifications including the interface specification of the source device 130 and/or the specification of the sink device 120. The AI mediator 300 may employ a Neural Network (NN), such as a NN having Long Short-Term Memory (LSTM) and/or Bilateral Multi-Perspective Matching (BiMPM) architectures, as described, for example, in Zhiguo Wang, Wael Hamza, Radu Florian (2017) Bilateral Multi-Perspective Matching for Natural Language Sentences, arXiv preprint arXiv:1702.03814; Tim Rocktäschel, Edward Grefenstette, Karl Moritz Hermann, Tomá 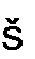 Ko 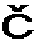 iský and Phil Blunsom (2016) Reasoning about entailment with neural attention, International Conference on Learning Representations; Alexander M Rush, Sumit Chopra, and Jason Weston (2015) A neural attention model for abstractive sentence summarization, Proceedings of the 2015 Conference on Empirical Methods in Natural Language Processing; Shengxian Wan, Yanyan Lany, Jiafeng Guoy, Jun Xuy, Liang Pang, and Xueqi Cheng (2015) A Deep Architecture for Semantic Matching with Multiple Positional Sentence Representations, Proceedings of the 2016 AAAI Conference on Artificial Intelligence; and/or Tao Lei, Regina Barzilay, and Tommi Jaakkola (2016) Rationalizing neural predictions, arXiv preprint arXiv:1606.04155. Such NN may be trained over large datasets, including open-source datasets such as described, for example, in Stanford Natural Language Inference (SNLI) Corpus, Samuel R. Bowman, Gabor Angeli, Christopher Potts, and Christopher D. Manning (2015) A large annotated corpus for learning natural language inference, Proceedings of the 2015 Conference on Empirical Methods in Natural Language Processing. In this way, inference of the human-readable text may be improved. Furthermore, the NN may be retrained on task-specific datasets to perform a targeted and/or a more constrained function, for example related to interface technology and/or attribute and/or data field identification.

The AI mediator 300 may be configured to receive a specification document, such as of the human-readable text interface specification of the source device 130. For example, the AI mediator 300 may be configured to receive an electronic version of the specification document. The specification document may be provided, for example, as a Microsoft Office (RTM) file such as a Word document, an Excel spreadsheet, a PowerPoint presentation, a Microsoft Visio (RTM) document or the like. The specification document may be provided as a Portable Document Format (PDF) (RTM) file. The specification document may be provided as an Open Document Format (ODF) (RTM) file. The specification document may be provided as an Extensible Metadata Platform (XMP) file. The AI mediator 300 may be configured to perform optical character recognition (OCR) of an image, such as scanned imaged of a hardcopy of a specification document. The AI mediator 300 may be configured to obtain a digital representation of the programmatic interface, such as by querying the programmatic interface. The AI mediator 300 may be configured to obtain information about the source device 130, for example, by questioning a human user and handling natural language responses, that may be provided in writing and/or by voice (i.e. verbally) to the computer device 200.

The AI mediator 300, for example the NLP engine, may be configured to perform one or more functions including:
1. understanding a structure of the specification document, such as of the interface specification of the source device 130;
2. interpreting technology used to implement the documented specification; and
3. discovering supporting information such as metadata and/or message attributes associated with the documented specification.

A goal of understanding the structure of the specification document is to discover document content most likely to be relevant to the other two functions. The AI mediator 300, for example the NLP engine, may be configured to parse a human-readable text specification document, such as of the interface specification of the source device 130 and/or of the specification of the sink device 120, so as to understand the structure of the specification document. Parsing (also known as syntax analysis or syntactic analysis) is the process of analysing a string of symbols, either in natural language or in computer languages, conforming to rules of a formal grammar. Parsing may refer to formal computational analysis of a sentence or other string of words into constituents, resulting in a parse tree that indicates syntactic relations between the constituents. The parse tree may also contain semantic and other information. The AI mediator 300, for example the NLP engine, may employ one or more standard document readers such as provided with and/or by Microsoft Word, Adobe Acrobat, Open Office, html editors and regular expression parsers to process the specification document. By processing the specification document in this way, terms of sentences in the specification document and/or equivalents for tables may be understood. Processing strategies may include using table-of-content and/or index information, using lists of tables, learning probable section heading names, searching for key-words and/or passing a part of or the whole specification document to the other functions.

To identify or interpret the technology used by the source device 130, for example to implement the documented specification and/or to provide the programmatic interface, a set of technology hypotheses to support a decision may be created, for example by the AI mediator 300, for example the NLP engine, and/or may be predetermined. For example, a hypothesis may be 'The source device 130 interface use Ethernet'. A goal may be to use a ML function to establish whether a part of the specification document, such as one or more words, phrases, strings, sentences and/or tables identified in the parsed specification document, entails (i.e. premises or supports) any of these technology hypotheses. Disambiguation may be improved by having more than one hypothesis per technology, though ML techniques are generally designed to handle synonyms. A strength of entailment of the technology hypotheses over some or all identified sentences may be used to evaluate a technology decision tree. The AI mediator 300, for example the NLP engine, may be configured to determine enabling technology of the source device 130 and/or the sink device, for example, from the parsed specifications, as described above.

ML techniques with deep neural network for NLP tasks such as entailment and question and answer problems may be improved using LSTM modules, as described, for example, in Rocktäschel *et al.* These LSTM (neural) modules may allow words, such as each word, in a sentence to be understood within a context of the sentence. This may be improved further by 'attending' bi-directionally to the words in the sentence, as described, for example, in Wan *et al*., and/or by matching from multiple perspectives, as described, for example, in Wang *et al.,* such as a top score to-date in a SNLI test set, as described, for example, in Bowman *et al.* These improvements may provide an efficient mechanism of creating additional learning capacity. However, improved functional performance may be associated with increased learning time and/or demand for training data.

The AI mediator 300, for example the NLP engine, may be trained, for example initially, on large open source datasets, as described, for example, in Bowman *et al.* Open source approaches such as word2vec may be used to learn optimal representations for large general lexicons, as described, for example, in word2vec Google Code Archive, https://code.google.com/archive/p/word2vec/; Tomas Mikolov, Ilya Sutskever, Kai Chen, Greg S. Corrado, and Jeff Dean (2013) Distributed representations of words and phrases and their compositionality, NIPS 2013. Subsequently and/or alternatively, the AI mediator 300, for example the NLP engine, may be retrained or trained respectively on a smaller focused dataset for a specific domain, such as a domain of the source device 130 and/or the sink device 120. For example, the AI mediator 300, for example the NLP engine, may be retrained or trained on a body of documents, such as technical documents and/or specification documents. In this way, models may be developed having a deep understanding of natural English language in general together with a specialism or bias towards a technical lexicon and semantics, such as typical of specification documents.

To discover supporting information, such as metadata and/or message attributes associated with the documented specification, a question and answer model rather than entailment may be a more natural approach, appropriate for the document specification. Questions may be predetermined and/or developed by the AI mediator 300, for example the NLP engine,. For example, generic questions may be predetermined and may include 'What port is used for the TCP socket?' In contrast, specific questions may be developed by the AI mediator 300, for example the NLP engine, for example, in response to answers to generic questions. The AI mediator 300, for example the NLP engine, may ask these questions of one or more parts of the specification document, such as one or more words, phrases, strings, sentences and/or tables identified in the parsed specification document. The AI mediator 300, for example the NLP engine, may be configured to discover such supporting information. The AI mediator 300, for example the NLP engine, may be configured identify a method of representation of the interface of the source device 130.

The AI mediator 300 may be configured to interoperate with open architectures, such as open computing architectures. Additionally and/or alternatively, the AI mediator 300 may comprise an open architecture, thereby supporting plugins such as algorithmic plugins, as described below.

The AI mediator 300 may comprise an open source machine learning framework, for example Google TensorFlow (RTM), Torch (RTM) or Theano RTM). The AI mediator 300 may be configured to be trained using an open source dataset, for example SNLI for initial general ML. The AI mediator 300 may comprise an open source utility, for example PDFMiner to extract text and/or formatting from PDF documents.

The AI mediator 300 may be configured to provide Q-Learning, as described, for example, in Christopher J.C.H. Watkins and Peter Dayan (1992) Q-Learning, Machine Learning 8(3-4) 279 - 292. For example, the AI mediator 300 may comprise a Q-Learning module. Q-Learning is based on adaptive ML heuristics and learns based on experience as well as trial and error. A benefit of Q-Learning is that it does not require a previously-created training dataset. Rather, Q-Learning may be considered as a 'decision making' and 'updating' ML algorithm that may be used in scenarios requiring a system to automatically learn and self-adjust without a previously-generated training dataset. Q-Learning may take decisions or 'actions' based on previous experiences and may select a best decision in order to reach or get closer to a specific goal. Actions lead to changes in system 'states'. When there are no experiences, a randomly-selected action is performed. High 'rewards' are given to good actions, whilst zero or low value rewards are given to bad actions. Experiences are stored in a data structure called the 'Q-Table'. The Q-Table is updated when new experiences are gained from the environment. This feedback loop, with rewards and actions, allows the system to 'learn'. In contrast to other ML heuristics, such as NNs which are static, Q-Learning may adapt in real-time. Q-Learning typically uses low CPU resources because updates and decision making are relatively trivial operations.

Based on output of these functions, the AI mediator 300 may be further configured to provide an adapter, such as a programmatic adapter, a software component, code, source code, compiled code or a script, configured to map the function of the programmatic interface exposed by the source device 130 to the associated function of the sink device 120. The AI mediator 300 may be configured to provide the adapter by, for example, creating or generating the adapter by authoring, scripting, coding, and/or compiling the adapter. The AI mediator 300 may be configured to provide the adapter by, for example, modifying, adapting and/or customizing an adapter, such as an existing and/or a generic and/or a template adapter. Modifying and/or customizing such an adapter may comprise authoring, scripting, coding, and/or compiling the adapter. Modifying, adapting and/or customizing such an adapter may additionally and/or alternatively comprise configuring the adapter using plugins. The adapter, configured in this way, may be provided to the sink device 120, for example by the computer device 200. In this way, in response to invoking the associated function by the sink device 120, the mapped function of the source device 130 is invoked in turn by the adapter.

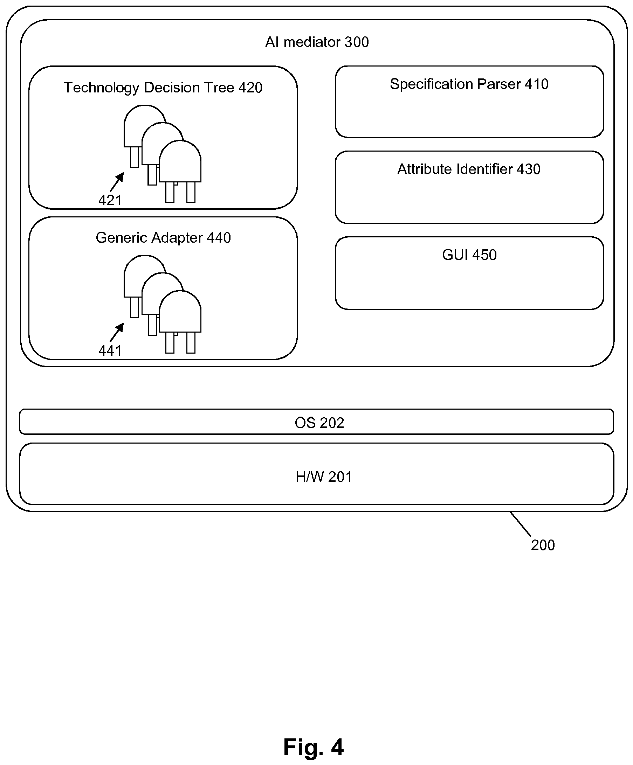

Figure 4 is a schematic overview of the computer device 200 according to an exemplary embodiment of the invention, in more detail. Particularly, the AI mediator 300 comprises a specification parser module 410, a technology decision tree module 420, an attribute identifier module 430, a generic adapter module 440 and a graphical user interface (GUI) 450. One or more of these modules, including the specification parser module 410, the technology decision tree module 420, the attribute identifier module 430 and the generic adapter module 440, may provide at least a part of the AI mediator 300, for example the NLP engine, as described above.

The specification parser module 410 may be configured to provide a function of the AI mediator 300, for example the NLP engine, as described above, such as the function of understanding the structure of the specification document. An input of the specification parser module 410 may be the specification document, such as for the programmatic interface exposed by the source device 130, as described previously. An output of the specification parser module 410, for example the parsed specification document, may be provided by the specification parser module 410 to the technology decision tree module 420.

The technology decision tree module 420 may be configured to provide a function of the AI mediator 300, for example the NLP engine, as described above, such as the function of interpreting technology used to implement the documented specification. The technology decision tree module 420 may comprise one or more technology decision tree plugins 421, configured to interpret the technology used to implement the documented specification. An output of the technology decision tree module 420, for example the technology decision tree, may be provided by the technology decision tree module 420 to the attribute identifier module 430 and/or to the generic adapter module 440.

The attribute identifier module 430 may be configured to provide a function of the AI mediator 300, for example the NLP engine, as described above, such as the function of discovering supporting information such as metadata and/or message attributes associated with the documented specification. An output of the attribute identifier module 430, may be provided by the attribute identifier module 430 and/or to the generic adapter module 440. This output may comprise a Bayesian decision tree for technology categories for the programmatic interface exposed by the source device 130, such as including identification of metadata, attributes or data-fields that are exploitable by the generic adapter module 440.

The generic adapter module 440 may be configured to map the function of the programmatic interface exposed by the source device 130 to the associated function of the sink device 120. The generic adapter module 440 may be configured to conform to the programmatic interface exposed by the source device 130, for example, using one or more generic adapter plugins 441 configured to provide, for example, interface adapters that map predetermined functions of programmatic interfaces. The generic adapter module 440 may be configured to provide one or more standards-based programmatic interfaces, configured to interface with the source device 130, for example. The generic adapter 440 may be configured to enable communication between the source device 130 and a user, such as to enable confirmation of the mapping. The generic adapter module 440, configured to map the function of the programmatic interface exposed by the source device 130 to the associated function of the sink device 120, may be provided to the sink device 120. In this way, in response to invoking the associated function by the sink device 120, the mapped function of the source device 130 is invoked in turn by the generic adapter 440.

The GUI 450 may be configured to enable interaction between a user and the technology decision tree module 420 and/or the attribute identifier module 430, such as to confirm decisions and/or select alternatives.

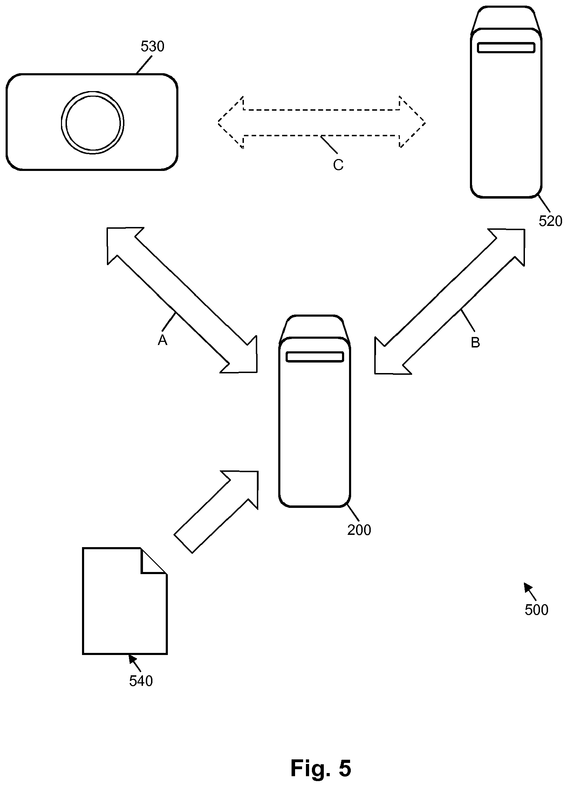

Figure 5 is a schematic overview of a part of a network 500 of a type which may be used in the example embodiments discussed herein, including the computer device 200 according to an example embodiment. Also included are a sink device 520 and a source device 530. Generally, the network 500, the sink device 520 and the source device 530 are as described above with reference to the network 100, the sink device 120 and the source device 130, respectively.

In this example, the source device 530 comprises a sensor, particularly an optical sensor. In this example, the source device 530 is a digital camera, having a charged coupled device (CCD) sensor. In this example, the sink device 520 comprises a control computer device.

A human-readable text specification document 540 for the programmatic interface exposed by the source device 530 is provided to the computer device 200 including the AI mediator 300. As described previously, the AI mediator 300 is configured to understand a structure of the specification document 540, interpret technology used to implement the documented specification 540 and discover supporting information such as metadata and/or message attributes associated with the documented specification. Based on output of these functions, the AI mediator is further configured to provide an adapter, such as the generic adapter 440 described previously, configured to map the function of the programmatic interface exposed by the source device 530 to the associated function of the sink device 520. In this way, the sink device 520 may be integrated with the source device 530, such that in response to invoking the associated function by the sink device 520, the mapped function of the source device 530 is invoked. For example, the sink device 520 may receive data such as images from the source device 530, via the mapped function. Further, the sink device 520 may control the source device 530, via the mapped function, to acquire an image, for example. In his way, integration of the sink device 520 with the source device 530 coupleable thereto is provided by the computer device 200 by mapping a function of a programmatic interface exposed by the source device 530 to an associated function of the sink device 520, thereby reducing reliance on human integration specialists and improving timescales to effect integration.

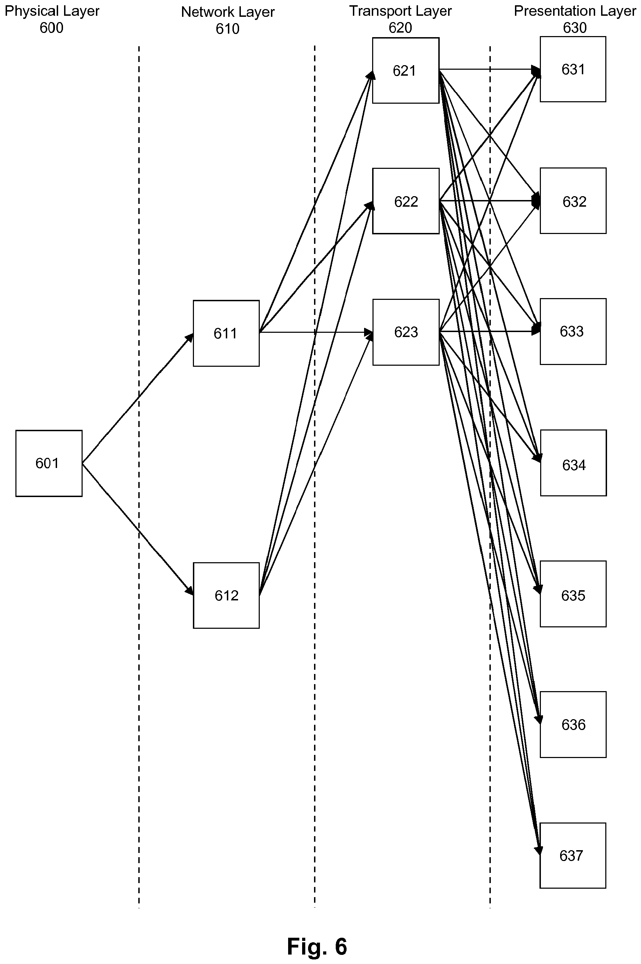

Figure 6 is an example partial technology decision tree provided by the AI mediator 300. In this example, the technology decision tree is arranged according to the Open Systems Interconnection (OSI) model, in which physical 600, network 610, transport 620 and presentation 630 layers are shown. Nodes of the technology decision tree are connected to other nodes in higher layers, such as adjacent higher layers.

The physical layer 600 includes a specification document node 601.

The network layer 610 includes Ethernet 611 and Wi-Fi (RTM) 612 nodes.

The transport layer 620 includes The User Datagram Protocol (UDP) 621, Transmission Control Protocol (TCP) 622 and Hypertext Transfer Protocol (HTTP) 623 nodes.

The presentation layer 630 includes Unicode (or Universal Coded Character Set) Transformation Format - 8-bit (UTF-8) 631, binary fixed length 632, binary variable length 633, Extensible Markup Language (XML) 634, Web Service Definition Language (WSDL) 635, JavaScript Object Notation (JSON) 636 and Moving Picture Experts Group 4 (MPEG-4) 637 nodes.

Other nodes may include, for example, Real Time Streaming Protocol (RTSP) or Advanced Message Queuing Protocol (AMQP) nodes, in these or other layers.

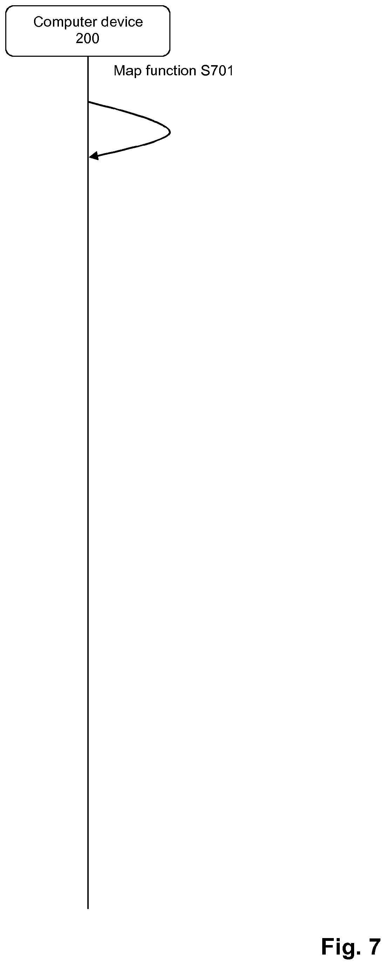

Figure 7 is a flowchart of the example method of operating the computer device 200 of Figure 1.

At S701, the AI mediator 300 maps the function of the programmatic interface exposed by the source device 130 to the associated function of the sink device 120. In this way, in response to invoking the associated function by the sink device 120, the mapped function of the source device 130 is invoked.

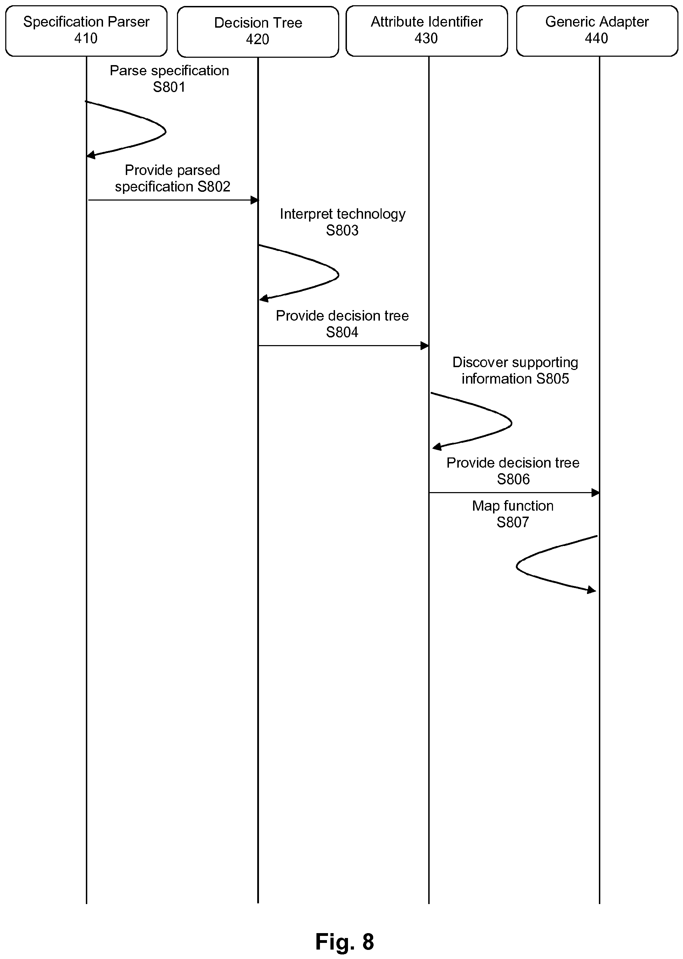

Figure 8 is a flowchart of the example method of operating the computer device of Figure 1, in more detail.

The specification document is provided to the specification parser module 410.

At S801, the specification parser module 410 understands the structure of the specification document by parsing the specification document.

At S802, the specification parser module 410 provides the parsed specification document to the technology decision tree module 420.

At S803, the technology decision tree module 420 interprets technology used to implement the documented specification.

At S804, the technology decision tree module 420 provides the technology decision tree to the attribute identifier module 430 and/or to the generic adapter module 440.

At S805, the attribute identifier module 430 discovers supporting information such as metadata and/or message attributes associated with the documented specification.

At S806, the attribute identifier module 430 provides the discovered supporting information together with the technology decision tree to the generic adapter module 440.

At S807, the generic adapter module 440 maps the function of the programmatic interface exposed by the source device 130 to the associated function of the sink device 120. The generic adapter module 440, configured to map the function of the programmatic interface exposed by the source device 130 to the associated function of the sink device 120, may be provided to the sink device 120. In this way, in response to invoking the associated function by the sink device 120, the mapped function of the source device 130 is invoked in turn by the generic adapter 440.

In summary, the invention provides a computer device and method for integrating a sink device with a source device coupleable thereto. The computer device comprises a processor circuit and a memory circuit. The computer device also comprises an artificial intelligence, AI, mediator. The AI mediator is configured to map a function of a programmatic interface exposed by the source device to an associated function of the sink device, whereby, in response to invoking the associated function by the sink device, the mapped function of the source device is invoked. In this way, integration of the sink device with the source device is facilitated, since the integration is provided by the computer device by mapping a function of a programmatic interface exposed by the source device to an associated function of the sink device, thereby reducing reliance on human integration specialists and improving timescales to effect integration.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A computer device for integrating a sink device with a source device coupleable thereto, the computer device comprising a processor circuit and a memory circuit, wherein the computer device comprises an artificial intelligence, AI, mediator configured to:
map a function of a programmatic interface exposed by the source device to an associated function of the sink device;
whereby, in response to invoking the associated function by the sink device, the mapped function of the source device is invoked.

2. The computer device according to claim 1, wherein the AI mediator is configured to parse a human-readable text specification document related to the programmatic interface.

3. The computer device according to any previous claim, wherein the AI mediator is configured to identify technology used by the source device.

4. The computer device according to any previous claim, wherein the AI mediator is configured to discover supporting information related to the source device.

5. The computer device according to any previous claim, wherein the AI mediator is configured to provide an adapter configured to map the function of the programmatic interface exposed by the source device to the associated function of the sink device.

6. The computer device according to any previous claim, wherein the source device comprises a sensor.

7. A method of integrating a sink device with a source device coupleable thereto, the method implemented on a computer device comprising a processor circuit and a memory circuit, wherein the computer device comprises an artificial intelligence, AI, mediator, the method comprising:
mapping a function of a programmatic interface exposed by the source device to an associated function of the sink device;
whereby, in response to invoking the associated function by the sink device, the mapped function of the source device is invoked.

8. The method according to claim 7, wherein the method comprises parsing a human-readable text specification document related to the programmatic interface.

9. The method according to any of claims 7 to 8, wherein the method comprises identifying technology used by the source device.

10. The method according to any of claims 7 to 9, wherein the method comprises discovering supporting information related to the source device.

11. The method according to any of claims 7 to 10, wherein the method comprises providing an adapter configured to map the function of the programmatic interface exposed by the source device to the associated function of the sink device.

12. The method according to any of claims 7 to 11, wherein the source device comprises a sensor.

13. A tangible non-transient computer-readable storage medium having recorded thereon instructions which, when implemented by a computer device including a processor circuit, a memory circuit and an artificial intelligence, AI, mediator, cause the computer device to perform a method comprising:
mapping a function of a programmatic interface exposed by the source device to an associated function of the sink device;
whereby, in response to invoking the associated function by the sink device, the mapped function of the source device is invoked.

14. A system comprising a computer device, a sink device and a source device coupleable thereto, the computer device comprising a processor circuit and a memory circuit, the computer device for integrating a sink device with a source device, wherein the computer device comprises an artificial intelligence, AI, mediator configured to:
map a function of a programmatic interface exposed by the source device to an associated function of the sink device;
whereby, in response to invoking the associated function by the sink device, the mapped function of the source device is invoked.

15. A method of integrating a sink device with a source device coupleable thereto, the method implemented at least in part on a computer device comprising a processor circuit, a memory circuit and an artificial intelligence, AI, mediator, the method comprising:
mapping, by the AI mediator, a function of a programmatic interface exposed by the source device to an associated function of the sink device;
in response to invoking the associated function by the sink device, invoking the mapped function of the source device.
